# FASCICULE DE BREVET EUROPEEN

(11) **EP 0 480 833 B1**
(45) Date de publication et mention de la délivrance du brevet: **26.07.1995**
(21) Numéro de dépôt: 91402704.0
(22) Date de dépôt: 10.10.1991
(51) Int. Cl.: H04Q 7/20, H04B 7/26, H04M 17/00

(54) **Installation radiotéléphonique à service de pré-paiement sécurisé**
Funktelefonanlage mit gesichertem Münzfernsprechdienst
Radio telephone installation with secure prepayment service

(30) Priorité: 10.10.1990 FR 9012510
(43) Date de publication de la demande: 15.04.1992
(73) Titulaire: FRANCE TELECOM, 75015 Paris (FR)
(72) Inventeur: Mazziotto, Gérald, F-75014 Paris (FR); Hiolle, Philippe, F-14200 Herouville-Saint-Clair (FR)
(74) Mandataire: Plaçais, Jean-Yves

(56) Documents cités:
- DE-A- 3 439 249
- GB-A- 2 225 689
- ELECTRICAL COMMUNICATION vol. 63, no. 4, 1989, ROMFORD (GB) pages 389 - 399; M. BALLARD ET AL: 'Cellular Mobile Radio as an Intelligent Network Application'
- HASLER MITTEILUNGEN. vol. 45, no. 4, Décembre 1986, BERN CH, pages 75-83; R. KUNZ: "Die Chip-Karte - Multifunktionskarte der Zukunft"

## Description

L'invention concerne une installation radiotéléphonique à service de pré-paiement sécurisé.

Elle trouve une application générale en radiocommunication et plus particulièrement dans les systèmes numériques de communication avec les mobiles publiques fonctionnant dans la bande des 900 MHz, appelés encore Groupe Spécial Mobile (GSM), ou avec les postes autonomes du type POINTEL (marque déposée), ou encore avec les postes mobiles du type DECT (Digital European Cordless Telephon) etc.

D'une façon générale, de tels systèmes numériques de communication comprennent :
- au moins un réseau téléphonique commuté;
- un système d'accès d'abonnés téléphoniques autonomes comprenant au moins une station de base reliée au réseau téléphonique commuté, des premiers moyens d'authentification propres à établir une fonction cryptographique F à l'aide d'une clé secrète et personnelle à chaque abonné, et des moyens de taxation propres à calculer les taxes d'utilisation des services payants du réseau téléphonique commuté;
- au moins un poste autonome comprenant des moyens pour établir une intercommunication radiotéléphonique avec la station de base, des seconds moyens d'authentification propres à établir la fonction cryptographique F à l'aide de la clé secrète et personnelle à l'abonné du poste autonome, et des moyens de pré-paiement propres à recevoir et payer les taxes d'utilisation calculées et transmises par les moyens de taxation.

Actuellement, il est prévu que le poste autonome accède à un service payant du réseau téléphonique commuté à l'issue d'une authentification confirmée de l'identité de l'abonné du poste autonome mettant en oeuvre les premiers et seconds moyens d'authentification. Un tel système est divulgué dans ELECTRICAL COMMUNICATION, vol. 63, no. 4, 1989, Romford (GB) pages 389-399, M. Ballard et al.: "Cellular Mobile Radio as an Intelligent Network Application."

Il est à remarquer que la fonction utilisée pour l'authentification de l'abonné et la fonction cryptographique F peuvent être identiques, ou voisines, ou complètement différentes l'une de l'autre ou encore utiliser des clés secrètes différentes.

En pratique, l'authentification de l'identité de l'abonné du poste autonome est une authentification de type actif avec l'échange entre le poste autonome et le système d'accès d'un nombre aléatoire et du transformé de ce nombre aléatoire par la fonction cryptographique F à l'aide de la clé secrète personnelle à l'abonné.

Une telle authentification de l'abonné permet seulement de s'assurer de l'authenticité de l'abonné et de l'autorisation pour cet abonné d'accéder aux services payants radiotéléphoniques.

Elle ne permet pas de garantir au système qui dialogue avec l'abonné ainsi identifié et autorisé d'accès que les moyens de pré-paiement récepteur de taxes d'utilisation sont intègres pendant toute la durée de la communication.

Or, les exploitants de tels systèmes de radiocommunications ont observé qu'un fraudeur peut s'interposer entre les moyens de pré-paiement récepteurs et les moyens de taxation émetteurs sur des liaisons radioélectriques déjà établies dans la mesure où le milieu radioélectrique n'offre aucune protection physique.

De plus, un fraudeur peut simuler frauduleusement par des moyens de traitement appropriés, l'inscription d'unités de taxation dans les moyens de pré-paiement récepteurs (par exemple une carte de pré-paiement) dans la mesure où lesdits moyens de pré-paiement qui coopèrent avec le poste autonome échappent à tout contrôle physique de sécurité ou d'intégrité de la part de l'exploitant.

Il en résulte que les cartes de pré-paiement actuelles ne sont pas satisfaisantes pour offrir un service de pré-paiement sûr dans une installation de radiotéléphonie notamment lorsque le poste autonome est embarqué dans une voiture de location qui échappe à tout contrôle de la part de la compagnie de location.

La présente invention a justement pour objet de remédier à ces inconvénients.

Ainsi, la présente invention a pour but de fournir une installation de radiotéléphonie capable d'assurer la confidentialité et l'intégrité des taxes d'utilisation au niveau de leur transmission entre des moyens de taxation émetteurs et des moyens de pré-paiement récepteurs, ainsi qu'au niveau de l'inscription de telles taxes d'utilisation dans les moyens de pré-paiement récepteurs.

La présente invention vise à garantir pour le système d'accès que les taxes d'utilisation transmises par les moyens de taxation à la carte de pré-paiement, via l'interface radio et le poste autonome, ont été correctement reçues et comprises, et qu'elles ont effectivement été défalquées du compteur d'unités prépayées de la carte de pré-paiement.

Un autre but de l'invention vise à utiliser les moyens d'authentification déjà présents dans l'installation pour mettre en oeuvre une authentification des taxes d'utilisation pendant toute la durée de,l'intercommunication.

L'invention part d'une installation radiotéléphonique comprenant :
- au moins un réseau téléphonique commuté,
- un système d'accès d'abonnés téléphoniques autonomes comprenant au moins une station de base reliée au réseau téléphonique commuté, des premiers moyens d'authentification propres à établir une fonction cryptographique F à l'aide d'une clé secrète et personnelle à chaque abonné, et des moyens de taxation propres à calculer les taxes d'utilisation des services payants du réseau téléphonique commuté;
- au moins un poste autonome comprenant des moyens pour établir une intercommunication radiotéléphonique avec la station de base, des seconds moyens d'authentification propres à établir la fonction cryptographique F à l'aide de la clé secrète et personnelle à l'abonné du poste autonome , et des moyens de pré-paiement propres à recevoir et payer les taxes d'utilisation calculées et transmises par les moyens de taxation.

Selon une définition générale de l'invention, au cours de l'intercommunication entre la station de base et le poste autonome, les premiers moyens d'authentification génèrent un mot clé dépendant de la taxe d'utilisation du service en cours et le transmettent vers le poste autonome. Les seconds moyens d'authentification calculent alors le transformé dudit mot clé par la fonction cryptographique F à l'aide de la clé secrète de l'abonné, et transmettent ledit transformé vers les premiers moyens d'authentification qui contrôlent l'authenticité dudit transformé pour inhiber totalement l'intercommunication en cas d'authenticité non confirmée par ledit contrôle.

Selon un mode de réalisation préféré de l'invention, le mot clé comprend un nombre aléatoire et la taxe d'utilisation du service en cours et en réponse audit mot clé, les seconds moyens d'authentification calculent le transformé du mot aléatoire par la fonction cryptographique F à l'aide de la clé secrète de l'abonné tandis que les moyens de pré-paiement reçoivent et payent la taxe d'utilisation.

Plus précisément, le poste autonome accède à un service payant du réseau téléphonique commuté à l'issue d'une authentification confirmée de l'identité de l'abonné du poste autonome mettant en oeuvre les premiers et seconds moyens d'authentification.

Avantageusement, l'authentification de l'identité de l'abonné du poste autonome est une authentification de type actif avec l'échange entre le poste autonome et le système d'accès d'un nombre aléatoire et du transformé de ce nombre aléatoire par la fonction cryptographique F à l'aide de la clé secrète et personnelle à l'abonné.

Selon un aspect de l'invention, les seconds moyens d'authentification ainsi que les moyens de pré-paiement sont logés dans un module d'identité d'abonné amovible propre à coopérer avec les moyens d'établissement d'intercommunication radioélectrique.

Selon un autre aspect de l'invention, les moyens de pré-paiement comprennent une mémoire protégée contre l'écriture intempestive directe de données par le monde extérieur et propre à contenir des données de pré-paiement de taxes d'utilisation et une unité de traitement propre à payer les taxes d'utilisation à l'aide desdites données de pré-paiement.

En pratique, la mémoire MEM est du type EPROM.

Selon un autre aspect de l'invention, le module d'identité d'abonné est logé dans une carte de type ISO standard et les moyens d'établissement d'intercommunication radioélectrique commprennent un lecteur pour la lecture de ladite carte.

En variante, le module d'identité d'abonné comprend un interface mécanique propre à s'enficher dans les moyens d'établissement d'intercommunications radioélectrique.

D'autres caractéristiques et avantages de l'invention apparaîtront à l'examen de la description détaillée ci-après, et des dessins annexés dans lesquels:
- la figure 1 représente un synoptique d'une installation radioélectrique de type connu;
- la figure 2 illustre schématiquement l'authentification des taxes d'utilisation selon l'invention; et
- la figure 3 représente un synoptique d'un poste autonome équipé d'un module d'identité d'abonné selon l'invention.

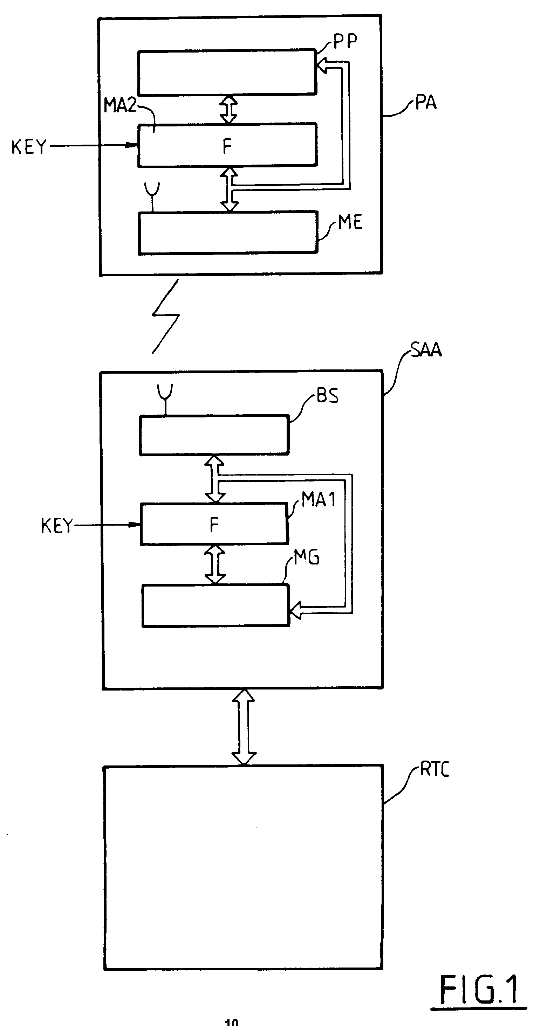

Sur la figure 1, une installation radiotéléphonique de type connu met en coopération un système d'accès d'abonnés téléphoniques autonomes SAA comprenant au moins une station de base BS reliée à au moins un réseau téléphonique commuté RTC avec au moins un poste autonome PA comprenant des moyens ME pour établir une intercommunication radioélectrique avec la station de base BS.

Une installation de ce genre, celle appartenant par exemple au Groupe Special Mobiles (GSM) est décrite dans la revue "L'écho des Recherches" n° 131, 1er trimestre 1988, pages 5 à 16, B. GHILLEBERT, P.COMBESCURE, A.MALOBERTI ainsi que dans le n° 139, 1er trimestre 1990, pages 13 à 19 P.JOLIE, G.MAZZIOTTO dans la même revue.

En pratique, le système d'accès d'abonnés téléphoniques autonomes SAA comprend au moins une station de base BS reliée au réseau téléphonique commuté RTC, des premiers moyens d'authentification MA1 propres à établir une fonction cryptographique F à l'aide d'une clé KEY secrète et personnelle à chaque abonné, et des moyens de taxation MG propres à calculer les taxes d'utilisation CONS des services payants du réseau téléphonique commuté RTC.

De son côté, le poste autonome PA comprend des moyens ME pour établir une intercommunication radiotéléphonique avec la station de base BS, des seconds moyens d'authentification MA2 propres à établir la fonction cryptographique F à l'aide de la clé KEY secrète et personnelle à l'abonné du poste autonome PA, et des moyens de pré-paiement PP propres à recevoir et payer les taxes d'utilisation CONS calculées et transmises par les moyens de taxation MG.

Il est à remarquer que la description de l'installation GSM ci-avant s'applique également, au niveau du principe de radiocommunication, aux autres installation de radiotéléphonie telle que celles appartenant au système français POINTEL (marque déposée) et au système DECT en cours de normalisation.

En pratique, selon les normes spécifiées par le GSM, le poste autonome PA accède à un service payant du réseau téléphonique commuté RTC à l'issue d'une authentification confirmée de l'identité de l'abonné du poste autonome PA mettant en oeuvre les premiers et seconds moyens d'authentification.

Plus précisément, les échanges entre le poste autonome PA et le système d'accès mobile SAA via interface radio et le réseau téléphonique commuté RTC sont les suivants.

Tout d'abord, les premiers moyens d'authentification MA1 génèrent un mot aléatoire RAND et le transmettent vers le poste autonome PA via l'interface radio.

Les seconds moyens d'authentification MA2 calculent alors le transformé du mot aléatoire SRES par la fonction cryptographique F à l'aide de la clé secrète et personnelle à l'abonné KEY.

Enfin, les seconds moyens de l'authentification MA2 transmettent ledit transformé SRES vers le système d'accès SAA qui contrôle donc l'authenticité du transformé SRES par comparaison de SRES calculé et transmis par le poste autonome PA et le SRES calculé par le système d'accès mobile SAA.

Il est clair ici que l'authentification se fait en début de communication. Dans les installations classiques, il n'y a plus d'autre authentification lors de l'intercommunication entre le poste autonome et le système d'accès mobile.

Actuellement, il n'y a pas de service de pré-paiement de taxes d'utilisation des services payants du réseau téléphonique commuté. Il existe bien un service de notification d'information de l'abonné. Plus précisément, ce service consiste au début de la communication à envoyer au poste autonome des paramètres permettant de calculer le montant de la communication en fonction du temps passé. En fait, c'est le poste autonome qui mesure ce temps et qui fait le calcul de la taxe d'utilisation qui peut être stocké comme sur un bloc-notes dans un module d'abonné que l'on décrira plus en détail ci-après.

Il en résulte que ce service de notification d'information de taxation n'est pas satisfaisant dans la mesure où il n'offre aucune précaution contre la fraude.

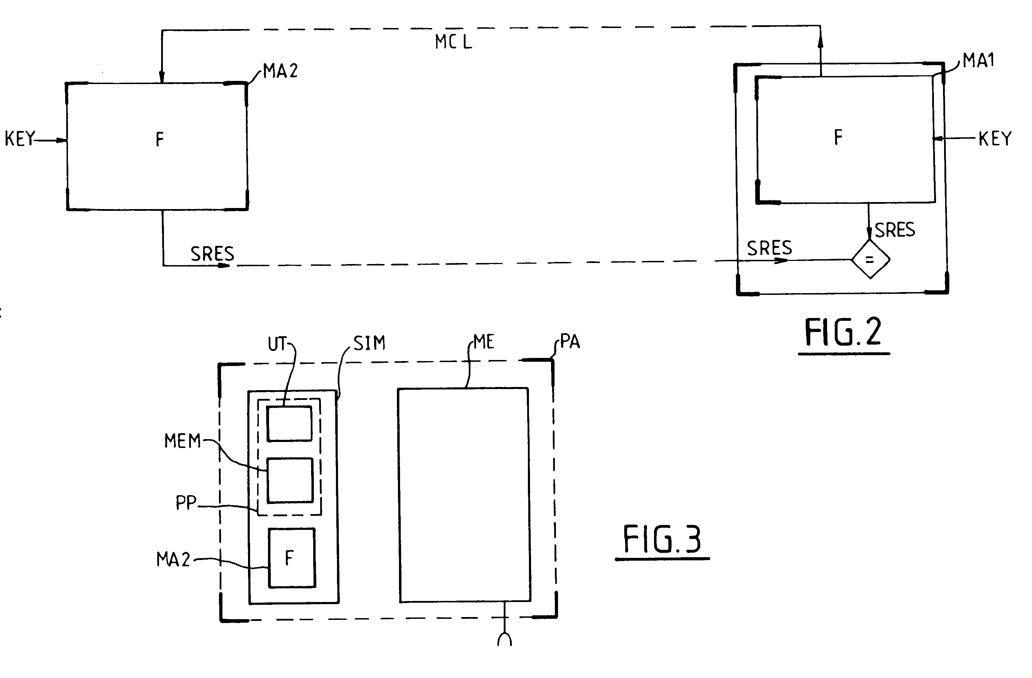

Nous nous référons maintenant à la figure 2.

En vue de s'assurer au niveau du système d'accès SAA que le poste autonome PA a bien reçu la valeur de la taxe d'utilisation consommée, il est prévu, selon l'invention, de procéder en cours de la communication radiotéléphonique à une authentification active de ladite taxe d'utilisation consommée.

Plus précisément, au cours de la communication entre la station de base BS et le poste autonome PA, les premiers moyens d'authentification MA1 génèrent un mot clé MCL dépendant de la taxe d'utilisation du service payant du réseau téléphonique commuté en cours, et le transmettent vers le poste autonome PA.

Les seconds moyens d'authentification MA2 calculent alors le transformé SRES dudit mot clé MCL par la fonction cryptographique F à l'aide de la clé secrète de l'abonné KEY, et transmettent ledit transformé SRES vers le système d'accès SAA qui contrôle alors enfin l'authenticité dudit transformé SRES pour inhiber totalement l'intercommunication en cas d'authenticité non confirmée par ledit contrôle.

En pratique, le mot clé MCL comprend un nombre aléatoire RAND et la taxe d'utilisation consommée CONS du service en cours.

Ainsi, en réponse au mot clé MCL, les seconds moyens d'authentification MA2 calculent le transformé SRES du mot aléatoire par la fonction cryptographique F à l'aide de la clé KEY secrète de l'abonné tandis que les moyens de pré-paiement PP recevoivent et payent la taxe d'utilisation consommée CONS.

Selon un mode de réalisation préféré de l'invention, les moyens de taxation MG amalgament selon un procédé connu de tous (c'est-à-dire des moyens d'authentification des postes autonomes), la valeur de taxes d'utilisation CONS et le nombre aléatoire RAND transmis pour cette authentification.

Par exemple, le mot clé MCL, le mot aléatoire RAND et la taxe d'utilisation consommée CONS ont respectivement une taille de 128, 124, et 4 bits.

Par exemple, le procédé permettant de former le mot clé MCL à partir du mot aléatoire RAND, et de la taxe d'utilisation consommée CONS est une addition bit à bit.

Après le controle d'authenticité des taxes d'utilisation consommées en cours de communication, il convient au poste autonome PA d'incrémenter ou de décrémenter les moyens de pré-paiement PP de la valeur CONS et de garantir qu'un tiers non autorisé ne peut en modifier le contenu.

Nous nous référons maintenant à la figure 3.

En pratique, les moyens de pré-paiement PP comprennent une mémoire MEM protégée contre l'écriture intempestive directe de données par le monde extérieur et propre à contenir des données de pré-paiement de taxes d'utilisation CONS et une unité de traitement UT propre à payer les taxes d'utilisation CONS à l'aide desdites données de pré-paiement.

Avantageusement dans l'application de l'invention dans le Groupe Spécial Mobile GSM, les seconds moyens d'authentification MA2 ainsi que les moyens de pré-paiement PP sont logés dans le module d'identité d'abonné SIM amovible qui coopère avec les moyens d'établissement ME d'intercommunication radioélectrique du poste autonome PA.

Avantageusement, la mémoire MEM est du type EPROM ou du type E²PROM correctement protégé par la logique de la carte.

Comme le prévoient les normes GSM, le module d'identité d'abonné SIM peut être logé dans une carte de type ISO standard. Dans ce cas, les moyens d'établissement d'intercommunication radioélectrique ME commprennent un lecteur pour la lecture de ladite carte.

En variante, le module d'identité d'abonné SIM peut comprendre un interface mécanique propre à s'enficher dans les moyens d'établissement d'intercommunications radioélectriques ME.

Il est clair que le procédé d'authentification des taxes d'utilisation consommée en cours de communication selon l'invention peut s'appliquer à tout système de communication radioélectrique avec les mobiles équipés de moyens d'authentification de type actif c'est-à-dire avec l'échange d'un aléa et d'une réponse chiffrée. Ce procédé s'applique également à la téléprogrammation sécurisée de données de taxation dans un équipement mobile où le module d'identé d'abonné de cet équipement contient l'algorithme cryptographique d'authentification et comporte un minimum de mémoire à accès réservé en écriture.

De la même façon, ce procédé peut s'appliquer aussi à la téléprogrammation de données diverses dans le module d'identité d'abonné dès que le réseau désire un accusé de réception certifié par ledit module.

Nous allons maintenant décrire une mise en oeuvre possible de l'invention dans une architecture de type GSM.

D'abord, il y a lieu de remarquer que l'organisation logique du module d'identité d'abonné SIM et l'interface radio sont spécifiées dans la recommandation ETSI.GSM 11.11.

La mise en oeuvre de l'invention au niveau du module d'identité d'abonné SIM nécessite la définition d'un nouveau fichier,appelé par exemple PREPAID.

Ce fichier a une lecture libre et une mise à jour protégée par la présentation d'une clé administrative. Cela signifie qu'une autorité administrative mandatée par l'exploitant du réseau mobile peut écrire dans ce fichier PREPAID une valeur qui représente la valeur totale de la consommation pré-payée permise au possesseur du module d'identité d'abonné SIM.

Selon l'invention, en cours de communication, les moyens d'établissement d'intercommunication radioélectrique ME transmettent au module d'identité d'abonné SIM le mot clé MCL provenant du système d'accès. Le module SIM extrait alors la valeur CONS et la soustrait au contenu du fichier PREPAID.

Si la valeur obtenue est inférieure ou égale à zéro, le module SIM est bloqué et la communication ne peut pas se poursuivre.

Sinon, le module SIM calcule le transformé SRES du mot aléatoire RAND par la fonction cryptographique F à l'aide de la clé KEY. Les moyens d'établissement d'intercommunication radioélectrique récupèrent alors le résultat du calcul SRES.

Au niveau du réseau, le module SIM porteur de l'application d'authentification des taxes d'utilisation selon l'invention est identifié par une identité d'abonné particulière qui réfère à un enregistreur nominal de localisation appelé encore HLR pour "Home location register " spécifique au réseau. Par exemple, cet enregistreur HLR gère tous les modules SIM porteur de l'application de pré-paiement selon l'invention.

Lorsque l'enregistreur nominal de localisation HLR reçoit une demande d'autorisation de communication pour un SIM porteur de l'application selon l'invention, il renvoit à un autre enregistreur appelé encore VLR pour "Visitor Location Register" un message comprenant le mot aléatoire RAND, la taxe d'utilisation consommée CONS, la clé mobile KEY, et le transformé du mot aléatoire SRES.

Il est à remarquer que le calcul de la taxe consommée et son authentification peut également se faire au niveau de l'enregistreur VLR (ce qui est peut-être plus avantageux pour la charge de signalisation du réseau).

Dans ce cas deux possibilités se présentent.

Dans la première possibilité, la clé d'authentification KEY est transmise de l'enregistreur nominal HLR à l'enregistreur VLR qui utilise alors le même algorithme d'authentification que celui du HLR pour procéder à l'authentification des taxes d'utilisation.

Dans la seconde possibilité, l'enregistreur nominal HLR transmet au VLR une clé de session délivrée par les moyens d'authentification dudit HLR. La clé de session est donc différente de la clé secrète KEY. L'enregistreur VLR ainsi que le module d'abonné SIM utilisent alors pour l'authentification des taxes d'utilisation un algorithme d'authentification ayant la clé de session comme clé d'authentification secrète.

L'intercommunication peut durer pendant plusieurs paliers successifs de consommation de taxation. Dans ce cas, il est prévu autant de procédures d'authentification qu'il y a de paliers successifs de consommation de taxation.

A chaque fois que l'utilisateur du SIM a consommé une valeur CONS de ressource du réseau correspondant à un palier de consommation de taxation ou (avant qu'il soit autorisé à consommer cette valeur selon le degré de confiance accordé par l'exploitant), le réseau exige alors une authentification active du module SIM avec le mot clé MCL et attend la réponse SRES pour continuer l'intercommunication.

Il est à noter que la présente invention s'applique également à l'architecture du système POINTEL (marque déposée).

Ainsi, l'utilisation d'une carte pré-payée dans le système POINTEL est possible selon l'invention malgré le défaut de sécurité quant à la confidentialité des informations échangées et à l'intrusion possible de fraudeurs.

Selon l'invention, il est prévu d'assurer un dialogue confidentiel et direct entre les deux extrémités du système POINTEL (c'est-à-dire entre la télécarte réceptrice et le système d'accès émetteur).

L'enchaînement des procédures POINTEL à l'interface radioélectrique est alors le suivant.

Tout d'abord, le poste autonome PA muni d'une télécarte de pré-paiement PP effectue une procédure classique d'établissement de liaison avec la station de base BS.

Ensuite, le système d'accès mobile SAA commence la procédure d'authentification de l'identité de la télécarte PP et le contrôle du droit d'accès de cette télécarte PP. Pour ce faire, le système d'accès mobile SAA procède à une authentification classique de type actif (c'est-à-dire échange entre le réseau et le poste autonome d'un aléa RAND et d'une réponse chiffrée SRES).

Selon l'invention, les premiers moyens d'authentification MA1 du système d'accès mobile SAA introduisent dans le nombre aléatoire RAND, le nombre d'unités pré-payées consommées CONS.

Puis, en réponse au mot clé MCL constitué par le nombre aléatoire RAND et le nombre d'unités pré-payées consommées CONS, les seconds moyens d'authentification MA2 du poste autonome PA calculent le transformé SRES de ce mot clé et le transmettent vers les premiers moyens d'authentification MA1.

Enfin, les premiers moyens d'authentification MA1 procèdent à la vérification du transformé SRES du mot aléatoire par la fonction cryptographique F à l'aide de la clé secrète KEY et personnelle à l'abonné.

Bien entendu, si le contrôle d'accès ou l'authentification n'est pas confirmé, l'intercommunication est inhibée. Il y a lieu de remarquer que cette procédure d'authentification est à la volonté du système d'accès SAA, c'est-à-dire qu'il peut procéder à cette authentification lorsqu'il le souhaite.

Dans le système POINTEL, l'authentification et le comptage sont attribués à l'unité de raccordement des bornes URB. Pour ce qui concerne l'authentification des taxes d'utilisation, il y a lieu de prévoir selon l'invention d'effectuer des authentifications en série tout au long de l'intercommunication entre le poste autonome et les moyens d'action mobiles.

C'est l'exploitant du système qui procède à la définition du nombre moyen d'authentifications en fonction du coût de la signalisation et le risque de perte de taxations encouru.

## Revendications

1. Installation radiotéléphonique comprenant :
- au moins un réseau téléphonique commuté (RTC),
- un système d'accès d'abonnés téléphoniques autonomes (SAA) comprenant au moins une station de base (BS) reliée au réseau téléphonique commuté (RTC), des premiers moyens d'authentification (MA1) propres à établir une fonction cryptographique F à l'aide d'une clé (KEY) secrète et personnelle à chaque abonné, et des moyens de taxation (MG) propres à calculer les taxes d'utilisation (CONS) des services payants du réseau téléphonique commuté (RTC);
- au moins un poste autonome (PA) comprenant des moyens (ME) pour établir une intercommunication radiotéléphonique avec la station de base (BS), des seconds moyens d'authentification (MA2) propres à établir la fonction cryptographique F à l'aide de la clé (KEY) secrète et personnelle à l'abonné du poste autonome (PA), et des moyens de prépaiement (PP) propres à recevoir et payer les taxes d'utilisation (CONS) calculées et transmises par les moyens de taxation (MG),
caractérisée en ce qu'au cours de l'intercommunication entre la station de base (BS) et le poste autonome (PA), les premiers moyens d'authentification (MA1) génèrent un mot clé (MCL) dépendant de la taxe d'utilisation (CONS) du service en cours et le transmettent vers le poste autonome (PA), en ce que les seconds moyens d'authentification (MA2) calculent le transformé (SRES) dudit mot clé (MCL) par la fonction cryptographique F à l'aide de la clé (KEY) secrète de l'abonné, et transmettent ledit transformé (SRES) vers les premiers moyens d'authentification (MA1) qui contrôlent l'authenticité dudit transformé (SRES) pour inhiber totalement l'intercommunication en cas d'authenticité non confirmée par ledit contrôle.

2. Installation selon la revendication 1, caractérisée en ce que le mot clé (MCL) comprend un nombre aléatoire (RAND) et la taxe d'utilisation (CONS) du service en cours et en ce qu'en réponse audit mot clé (MCL), les seconds moyens d'authentification (MA2) calculent le transformé (SRES) du mot aléatoire par la fonction cryptographique F à l'aide de la clé (KEY) secrète de l'abonné tandis que les moyens de pré-paiement (PP) reçoivent et payent la taxe d'utilisation ( CONS ).

3. Installation selon la revendication 1, caractérisée en ce que le poste autonome (PA) accède à un service payant du réseau téléphonique commuté (RTC) à l'issue d'une authentification confirmée de l'identité de l'abonné du poste autonome (PA) mettant en oeuvre les premiers et seconds moyens d'authentification (MA1 et MA2).

4. Installation selon la revendication 3, caractérisée en ce que l'authentification de l'identité de l'abonné du poste autonome (PA) est une authentification de type actif avec l'échange entre le poste autonome (PA) et le système d'accès (SAA) d'un nombre aléatoire et du transformé de ce nombre aléatoire par la fonction cryptographique F à l'aide de la clé secrète (KEY) personnelle à l'abonné.

5. Installation selon l'une quelconque des précédentes revendications, caractérisée en ce que les seconds moyens d'authentification (MA2) ainsi que les moyens de pré-paiement (PP) sont logés dans un module d'identité d'abonné (SIM) amovible propre à coopérer avec les moyens d'établissement (ME) d'intercommunication radioélectrique.

6. Installation selon la revendication 5, caractérisée en ce que les moyens de pré-paiement (PP) comprennent une mémoire (MEM) protégée contre l'écriture intempestive directe de données par le monde extérieur et propre à contenir des données de pré-paiement de taxes d'utilisation (CONS) et une unité de traitement (UT) propre à payer les taxes d'utilisation (CONS) à l'aide desdites données de pré-paiement.

7. Installation selon la revendication 6, caractérisée en ce que la mémoire (MEM) est du type EPROM ou E²PR0M avec une protection logique appropriée.

8. Installation selon l'une quelconque des précédentes revendications, caractérisée en ce que le module d'identité d'abonné (SIM) est logé dans une carte de type ISO standard et en ce que les moyens d'établissement d'intercommunication radioélectrique (ME) comprennent un lecteur pour la lecture de ladite carte.

9. Installation selon l'une quelconque des revendications 1 à 8, caractérisée en ce que le module d'identité d'abonné (SIM) comprend un interface mécanique propre à s'enficher dans les moyens d'établissement d'intercommunications radioélectriques.

## Patentansprüche

1. Funkvorrichtung, umfassend:
- mindestens ein schaltbares Fernsprechnetz (RTC)
- ein Zugangssystem für netzunabhängige fernmündliche Teilnehmer (SAA), das mindestens eine Basisstation (BS), die mit dem schaltbaren Fernsprechnetz (RTC) verbunden ist, und eine erste Einrichtung zur Überprüfung der Zugangsberechtigung (MA1) aufweist, die geeignet ist, eine Chiffrierfunktion F mit Hilfe eines geheimen und für jeden Teilnehmer persönlichen Schlüssels (KEY) zu erstellen, und eine Einrichtung zur Gebührenberechnung (MG) umfaßt, die geeignet ist, die Benutzungsgebühren (CONS) der gebührenpflichtigen Dienstleistung des schaltbaren Fernsprechnetzes (RTC) zu berechnen;
- mindestens eine netzunabhängige Vorrichtung (PA), die eine Einrichtung (ME) zur Errichtung eines wechselseitigen Funksprechverkehrs mit der Basisstation (BS) und eine zweite Einrichtung zur Überprüfung der Zugangsberechtigung (MA2) umfaßt, die geeignet ist, eine Chiffrierfunktion F mit Hilfe eines geheimen und für jeden Teilnehmer der netzunabhängigen Vorrichtung (PA) persönlichen Schlüssels (KEY) zu erstellen, und eine Einrichtung zur Vorausbezahlung der Gebühren (PP) umfaßt, die geeignet ist, die von der Einrichtung zur Gebührenberechnung (MG) berechneten und übermittelten Benutzungsgebühren (CONS) zu empfangen und abzubezahlen,
**dadurch gekennzeichnet**,
daß während des wechselseitigen Sprechverkehrs zwischen der Basisstation (BS) und der netzunabhängigen Vorrichtung (PA) die erste Einrichtung zur Überprüfung der Zugangsberechtigung (MA1) einen Schlüsselcode erzeugt, der von der Benutzungsgebühr (CONS) der laufenden Dienstleistung abhängt, und ihn an die netzunabhängige Vorrichtung (PA) übermittelt, und
daß die zweite Einrichtung zur Überprüfung der Zugangsberechtigung (MA2) die Umwandlung (SRES) des Schlüsselcodes (MCL) durch die Chiffrierfunktion F mit Hilfe des geheimen Schlüssels (KEY) des Teilnehmers berechnet und diese Umwandlung (SRES) an die erste Einrichtung zur Überprüfung der Zugangsberechtigung (MA1) übermittelt, die die Echtheit der Umwandlung (SRES) überprüft, um den wechselseitigen Sprechverkehr vollständig zu hemmen, falls die Echtheit durch die Überprüfung nicht bestätigt wird.

2. Vorrichtung nach Anspruch 1,
**dadurch gekennzeichnet**,
daß der Schlüsselcode (MCL) eine Zufallszahl und die Benutzungsgebühr (CONS) der laufenden Dienstleistung umfaßt,
und daß in Erwiderung auf den Schlüsselcode (MCL) die zweite Einrichtung zur Überprüfung der Zugangsberechtigung (MA2) die Umwandlung (SRES) des Zufallscodes durch die Chiffrierfunktion F mit Hilfe des geheimen Schlüssels (KEY) des Teilnehmers berechnet, während die Einrichtung zur Vorausbezahlung der Gebühren (PP) die Benutzungsgebühr (CONS) empfängt und abbezahlt.

3. Vorrichtung nach Anspruch 1,
**dadurch gekennzeichnet**,
daß die netzunabhängige Vorrichtung (PA) Zugang zu einer gebührenpflichtigen Dienstleistung des schaltbaren Fernsprechnetzes (RTC) nach der Zulassungsbestätigung der Teilnehmeridentität der netzunabhängigen Vorrichtung (PA) erhält, welche die erste und die zweite Einrichtung zur Überprüfung der Zugangsberechtigung (MA1 und MA2) betätigt.

4. Vorrichtung nach Anspruch 3,
**dadurch gekennzeichnet,**
daß die Überprüfung der Zugangsberechtigung der Teilnehmeridentität der netzunabhängigen Vorrichtung (PA) eine aktive Überprüfung ist, wobei die Zufallszahl und die Umwandlung dieser Zufallszahl, die durch die Chiffrierfunktion F mit Hilfe des geheimen und für den Teilnehmer persönlichen Schlüssels (KEY) berechnet wird, zwischen der netzunabhängigen Vorrichtung (PA) und dem Zugangssystem (SAA) ausgetauscht werden.

5. Vorrichtung nach einem der vorhergehenden Ansprüche, **dadurch gekennzeichnet**,
daß die zweite Einrichtung zur Überprüfung der Zugangsberechtigung (MA2) sowie auch die Einrichtung zur Vorausbezahlung der Gebühren (PP) in einem lösbaren Modul der Teilnehmeridentität (SIM) angeordnet ist, das geeignet ist, mit der Einrichtung zur Errichtung eines wechselseitigen Funksprechverkehrs (ME) zusammenzuarbeiten.

6. Vorrichtung nach Anspruch 5,
**dadurch gekennzeichnet**,
daß die Einrichtung zur Vorausbezahlung der Gebühren (PP) einen Speicher (MEM) aufweist, der gegen versehentliches direktes Schreiben von Daten von der Außenwelt geschützt ist und der geeignet ist, die Vorausbezahlungsdaten der Benutzungsgebühren (CONS) zu fassen und daß die Einrichtung zur Vorausbezahlung der Gebühren (PP) eine Verarbeitungseinheit (UT) umfaßt, die geeignet ist, die Benutzungsgebühren (CONS) mit Hilfe der Vorausbezahlungsdaten abzuzahlen.

7. Vorrichtung nach Anspruch 6,
**dadurch gekennzeichnet**,
daß der Speicher (MEM) vom Typ EPROM oder E2PROM mit einer geeigneten logischen Speichersicherung ist.

8. Vorrichtung nach einem der vorhergehenden Ansprüche,
**dadurch gekennzeichnet**,
daß das Modul der Teilnehmeridentität (SIM) in einer Karte des Typs ISO Standard angeordnet ist und daß die Einrichtung zur Errichtung des wechselseitigen Funksprechverkehrs (ME) eine Lesevorrichtung zum Lesen der Karte umfaßt.

9. Vorrichtung nach einem der vorhergehenden Ansprüche 1 bis 8,
**dadurch gekennzeichnet**,
daß das Modul der Teilnehmeridentität (SIM) eine mechanische Schnittstelle umfaßt, die in die Einrichtung zur Errichtung des wechselseitigen Funksprechverkehrs steckbar ist.

## Claims

1. Radiotelephonic installation comprising:
- at least one commutated telephone network (RTC),
- an access system for independent telephone subscribers (SAA) comprising at least one base station (BS) connected to the commutated telephone network (RTC), first authentication means (MA1) able to initiate a cryptographic function F with the aid of a key (KEY) which is secret and personal to each subscriber, and tariff means (MG) able to calculate the tariffs (CONS) for use of the services of the commutated telephone network (RTC) for which a charge is made;
- at least one independent set (PA) comprising means (ME) to establish radiotelephonic intercommunication with the base station (BS), second authentication means (MS2) able to initiate the cryptographic function F with the aid of the key (KEY) which is secret and personal to the subscriber of the independent set (PA), and prepayment means (PP) able to receive and pay usage tariffs (CONS) calculated and transmitted by the tariff means (MG),
characterised in that during the intercommunication between the base station (BS) and the independent set (PA), the first authentication means (MA1) generate a key word (MCL) depending on the tariff (CONS) for use of the service concerned and transmit it to the independent set (PA), in that the second authentication means (MA2) calculate the transform (SRES) of the key word (MCL) by the cryptographic function F with the aid of the key (KEY) which is secret to the subscriber, and transmit the said transform (SRES) to the first authentication means (MA1) which check the authenticity of the said transform (SRES) in order totally to prevent intercommunication in the case of authenticity not being confirmed by the said check.

2. Installation according to claim 1, characterised in that the key word (MCL) comprises a random number (RAND) and the tariff (CONS) for use of the service concerned, and in that in response to the said key word (MCL), the second authentication means (MA2) calculate the transform (SRES) of the random word by the cryptographic function F with the aid of the key (KEY) which is secret to the subscriber, while the prepayment means (PP) receive and pay the usage tariff (CONS).

3. Installation according to claim 1, characterised in that the independent set (PA) accesses a charged service of the commutated telephone network (RTC) at the end of a confirmed authentication of the identity of the subscriber of the independent set (PA), employing the first and second authentication means (MA1 and MA2).

4. Installation according to claim 3, characterised in that the authentication of the identity of the subscriber of the independent set (PA) is an authentication of the active type with the exchange between the independent set (PA) and the access system (SAA) of a random number and of the transform of this random number by the cryptographic function F with the aid of the secret key (KEY) which is personal to the subscriber.

5. Installation according to any of the preceding claims, characterised in that the second authentication means (MA2) and the prepayment means (PP) are housed in a subscriber identity module (SIM) which is removable and able to cooperate with the means (ME) for establishing radioelectrical intercommunication.

6. Installation according to claim 5, characterised in that the prepayment means (PP) comprise a memory (MEM) protected against direct inopportune writing of data by other people and able to contain data for the prepayment of usage tariffs (CONS) and a processing unit (UT) able to pay the usage tariffs (CONS) with the aid of the said prepayment data.

7. Installation according to claim 6, characterised in that the memory (MEM) is of the EPROM or E²PROM type with a suitable logic protection.

8. Installation according to any of the preceding claims characterised in that the subscriber identity module (SIM) is housed in a card of the standard ISO type and in that the means for establishing radioelectrical intercommunication (ME) comprise a reader to read the said card.

9. Installation according to any of claims 1 to 8, characterised in that the subscriber identity module (SIM) comprises a mechanical interface able to be plugged into the means for establishing radioelectrical intercommunication.
